# EUROPÄISCHE PATENTSCHRIFT

(11) **EP 0 927 107 B1**
(45) Veröffentlichungstag und Bekanntmachung des Hinweises auf die Patenterteilung: **16.01.2002**
(21) Anmeldenummer: 97920657.0
(22) Anmeldetag: 11.04.1997
(51) Int. Cl.: B60H 1/00

(54) **HEIZUNGS- UND/ODER KLIMAEINRICHTUNG**
HEATING AND/OR AIR CONDITIONING SYSTEM
INSTALLATION DE CHAUFFAGE ET/OU CLIMATISATION

(30) Priorität: 17.09.1996 DE 19637783
(43) Veröffentlichungstag der Anmeldung: 07.07.1999
(73) Patentinhaber: Siemens Aktiengesellschaft, 80333 München (DE)
(72) Erfinder: DÖHRING, Klaus, D-63741 Aschaffenburg (DE)
(74) Vertreter: Klein, Thomas, Dipl.-Ing. (FH)
(86) Internationale Anmeldenummer: EP9701816
(87) Internationale Veröffentlichungsnummer: WO9812060

(56) Entgegenhaltungen:
- EP-A- 0 681 934
- DE-A- 4 214 687
- DE-A- 4 442 000
- DE-C- 19 528 714
- DE-U- 8 632 160
- FR-A- 2 516 213
- FR-A- 2 580 791
- GB-A- 935 934

## Beschreibung

Die Erfindung betrifft eine Heizungs- und/oder Klimaeinrichtung, insbesondere für den Innenraum von Fahrzeugen, mit mindestens einem Gebläse und mindestens zwei Luftführungen, wobei mindestens zwei der Luftführungen in einen Mischraum münden.

Derartige Heizungs- und/oder Klimaeinrichtungen sind bekannt. Z.B. zeigt DE 42 14 687 A1 eine Kraftfahrzeug-Klimaanlage mit einem in Luftströmungsrichtung hinter einer Luftansaugleitung angeordneten Gebläse. Dem Gebläse nachfolgend teilt sich in Strömungsrichtung die Luftleitung in zwei Luftleitungsabschnitte, wobei in einem Abschnitt eine Heizvorrichtung vorgesehen ist. Die Aufteilung des ankommenden Luftstroms auf die beiden vorgenannten Luftleitungsabschnitte erfolgt mit Hilfe einer Mischklappe. Die Mischklappe schließt in ihren beiden Endstellungen jeweils einen der parallelen Leitungsabschnitte völlig ab, so daß in den beiden Grenzfällen die ankommende Luft entweder vollständig über eine Heizvorrichtung geleitet wird oder vollständig ungeheizt weitergeleitet wird. Zwischen diesen beiden Endstellungen der Mischklappe sind beliebige Zwischenstellungen möglich. Eine Vereinigung der beiden aus den parallelen Luftleitungsabschnitten austretenden Luftströmungen findet in einer nachfolgenden Mischkammer statt. Von dort aus gelangt die Luft über mit Klappen ganz oder teilweise verschließbare Ausblaskanäle in den Fahrzeuginnenraum. Ein entscheidender Nachteil dieser bekannten Vorrichtung ist der erforderliche sehr große Bauraum.

Weiterhin ist aus DE 195 28 714 C1 eine Heizungs- und/oder Klimaanlage für Fahrzeuginnenräume mit jeweils einem in einen Mischraum mündenden Warmluft- und Kaltluftkanal bekannt. Eine Dosierung des Warmluft- bzw. Kaltluftstroms erfolgt über in den jeweiligen Kanälen vorgesehene Klappen. Durch eine besondere, von den Stellungen der beiden Klappen abhängige Steuerung kann ein größeres Wohlbefinden der Fahrzeugpassagiere erreicht werden. Jedoch beansprucht auch diese Vorrichtung einen großen Bauraum. Darüber hinaus basiert sie auf einer sehr aufwendigen Konstruktion mit zahlreichen beweglichen - und damit schadens- und verschleißanfälligen - Bauteilen.

Um den Einbauraum einer Heizungs- und/oder Klimaeinrichtung zu verkleinern, schlägt DE 44 42 000 A1 vor, anstelle einer Misch- oder Steuerklappe übereinander in Einbaurahmen angebrachte Lamellen zur Dosierung des Warm- bzw. Kaltluftstroms zu verwenden. Hierfür sind insgesamt drei Lamellenpakete notwendig. Diese Konstruktion ist noch aufwendiger als die vorbeschriebene und beinhaltet noch mehr bewegliche Bauteile. Mit einer entsprechenden Vorrichtung läßt sich zwar der Einbauraum einer Heizungs- und/oder Klimaeinrichtung verkleinern, jedoch muß dafür ein erhöhter Bauaufwand in Kauf genommen werden.

Aus DE 86 32 160 U1 ist eine Luftmischvorrichtung für Belüftungsanlagen zur Belüftung des Innenraums von Kraftfahrzeugen mit der Möglichkeit, den Luftzufluß wahlweise zu unterbinden, bekannt. Dabei ist ein in einer von einem Lufteinlaufstutzen abzweigenden Leitung angeordneter Ventilator sowie im weiteren Verlauf der Leitung eine Mischvorrichtung zur Verteilung von Luft im Inneren des Fahrgastraums vorgesehen. Durch einen großen Abstand von Ventilator und Mischvorrichtung beansprucht die Einrichtung viel Einbauraum.

Eine Luftkanal-Schaltvorrichtung zum Öffnen und Schließen eines Luftkanals ist aus der gattungsgemäßen EP-A-0 681 934 bekannt. Diese Vorrichtung umfaßt ein von einem Stützelement getragenes, flexibles Filmelement zum Öffnen und Schließen einer Luftöffnung, wobei das Filmelement, wenn die Luftöffnung geschlossen ist, durch Winddruck einer Luftströmung mit der Luftöffnung in Berührung kommt.

Der Erfindung liegt die Aufgabe zugrunde, eine Heizungs- und/oder Klimaeinrichtung, insbesondere für den Innenraum von Fahrzeugen, zu schaffen, die trotz hoher Funktionalität und geringer Schadens- und Verschleißanfälligkeit eine äußerst kompakte Bauweise aufweist.

Diese Aufgabe wird erfindungsgemäß dadurch gelöst, daß ein rotatorischer oder translatorischer Schieber zwischen mindestens einem der Gebläse und mindestens zwei der Luftführungen in unmittelbarer Nähe des Gebläses angeordnet ist.

Im Gegensatz zu aus dem Stand der Technik bekannten Einrichtungen kann durch den Einsatz eines dem Gebläse zugeordneten Schiebers anstelle einer Klappe zum dosierenden Aufteilen eines Luftstromes eine wesentlich kompaktere Bauform erreicht werden. Darüber hinaus ist es von großem Vorteil, daß die Luftkräfte auf den Schieber nicht die Stellkräfte beeinflussen, wie es bei aus dem Stand der Technik bekannten Klappen der Fall ist.

In einer einfachen Ausführungsform kann der Schieber eine etwa ebene Platte sein, die etwa senkrecht in den Luftstrom eingeführt wird. Zum Erzielen besonderer, erwünschter Strömungsverhältnisse kann sowohl die Platte leicht gewölbt sein als auch unter einem vom rechten Winkel abweichenden Winkel in den Luftstrom eingeführt werden.

Besonders vorteilhaft ist der Schieber jedoch ein Hohlzylinder oder ein Segment eines Hohlzylinders. Es ist dann möglich, daß der Schieber ein Gebläselaufrad zumindest teilweise radial umschließt. Auf diese Weise wird eine Konstruktion erreicht, in der nur minimaler Bauraum für den Schieber zur Verfügung gestellt werden muß, wobei gleichzeitig eine einfache Verstellbarkeit des Schiebers geliefert wird. Der Schieber muß dabei nur von einem so großen Segment eines Hohlzylinders gebildet werden, daß jeweils ein vollständiges Schließen einer der zu beaufschlagenden Luftführungen ermöglicht wird. Zur kontrollierten Weiterleitung des Luftstroms weist der Schieber vorzugsweise eine Durchströmöffnung auf. Gut ist es, wenn die Durchströmöffnung der Geometrie der nachgeordneten und zu beaufschlagenden Luftführungen angepaßt ist. Dabei ist zu berücksichtigen, daß es auch wünschenswert sein kann, in bestimmten Fällen eine oder mehrere der nachgeordneten Luftführungen mit einem ständigen Luftstrom zu beaufschlagen.

Vorzugsweise ist die Durchströmöffnung ein Schlitz und erstreckt sich im wesentlichen über die gesamte Breite des Schiebers, Zumindest in den Randbereichen der Durchströmöffnung können Stabilisierungsstege, die die Öffnung übergreifen, sinnvoll sein.

Je nach Anwendungsfall und/oder gewünschter Regelgenauigkeit kann der Schieber stufenlos oder stufig verstellbar sein. Eine stufige Verstellbarkeit läßt sich beispielsweise mit Rasten verwirklichen.

Vorzugsweise ist eine der von dem Gebläse beaufschlagten Luftführungen eine Warmluftführung, in der in vorteilhafter Weise eine Heizvorrichtung angeordnet ist. Besonders günstig ist es, wenn auch eine der Luftführungen eine Kaltluftführung ist. In diesem Fall kann die erfindungsgemäße Einrichtung zur Erzeugung eines Luftstroms beliebiger Temperatur (begrenzt nur nach oben durch die Heizleistung einer Heizvorrichtung sowie nach unten durch die Temperatur der Umgebungsluft oder der von einer Kühlvorrichtung zugeführten Luft) verwendet werden. Es ist aber genauso gut vorstellbar, die erfindungsgemäße Einrichtung zum dosierten Mischen z.B. von Innen- und Außenluft oder trockener/feuchter Luft zu verwenden, ganz allgemein zum dosierten Mischen beliebiger Luftströme.

Je nach Einsatzgebiet und Aufbau einer Heizungs- und/oder Klimaeinrichtung kann es vorteilhaft sein, daß Schieber und Luftführungen an der Luftaustrittsseite des Gebläses angeordnet sind oder daß Schieber und Luftführungen an der Lufteintrittsseite des Gebläses angeordnet sind. Vorteilhaft kann es auch sein, sowohl an der Lufteintrittsseite des Gebläses als auch an dessen Luftaustrittsseite erfindungsgemäße Schieber und Luftführungen vorzusehen, so daß z.B. an der Lufteintrittsseite ein dosiertes Mischen von Innen- und Außenluft oder Luft hoher und niedriger Luftfeuchtigkeit erfolgt, wohingegen auf der Luftaustrittsseite ein warmer und ein kalter Luftstrom in gewünschtem Verhältnis erzeugt wird.

Besonders einfach und vorteilhaft ist es, wenn der Schieber in einer Nut eines Gehäuses führbar ist. Eine Verstellung des Schiebers kann manuell oder - komfortabel und die Möglichkeit einer automatischen Steuerung und Regelung eröffnend - motorisch zu bewirken sein. Der Schieber kann dabei unmittelbar oder mittels eines Bowden-Zugs verstellbar sein.

Im Interesse einer besonders kompakten Bauweise kann der Schieber Teil oder Ganzes eines Gebläsegehäuses sein. Alternativ sind das Gebläse und der Schieber vorteilhaft in einem einzigen Gehäuse angeordnet. Ebenso vorteilhaft ist es, wenn der Schieber und zumindest Teile der Luftführungen in einem einzigen Gehäuse angeordnet sind.

Die Erfindung wird im folgenden anhand von in den beigefügten Zeichnungen dargestellten Ausführungsbeispielen näher erläutert. Es zeigt
- Figur 1: eine Schieberanordnung an einem Gebläse einer Heizungs- und/oder Klimaeinrichtung nach der Erfindung in einer Schnittansicht und
- Figur 2: ein Gebläse mit einem Schieber nach Figur 1, eingebaut in eine Heizungs- und/oder Klimaanlage, in perspektivischer, teilweise geschnittener Darstellung.

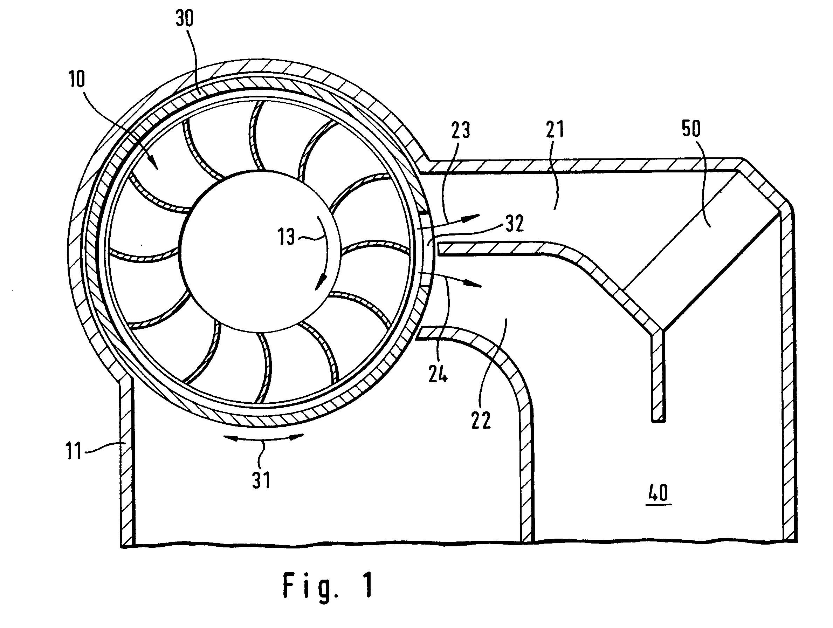

In Figur 1 ist ein Gebläse 10 mit einem Gehäuse 11 und luftaustrittsseitigen Luftführungen 21, 22 in geschnittener Seitenansicht dargestellt. Das Gebläse 10 wird in bekannter Weise von einem nicht dargestellten Gebläsemotor in Gebläse-Drehrichtung 13 angetrieben. In üblicher Weise erfolgt die Luftzufuhr zum Gebläse axial, die Luftabfuhr radial. Luftaustrittsseitig ergeben sich entsprechend Luft-Strömungsrichtungen 23, 24 in den Luftführungen 21, 22.

Das Laufrad des Gebläses 10 ist von einem drehbaren hohlzylinderförmigen Schieber 30 mit einer Schieber-Durchströmöffnung 32 umgeben. Die Schieber-Durchströmöffnung 32 ist schlitzförmig in axialer Richtung bezüglich des Gebläselaufrades ausgebildet und führt den vom Gebläse geförderten Luftstrom den Luftführungen 21, 22 zu. Durch eine Drehung des Schiebers 30 in Schieber-Bewegungsrichtung 31 läßt sich das Verhältnis des jeweils in die Luftführung 21, 22 abgehenden Luftstroms einstellen.

In der Luftführung 21 ist eine Heizvorrichtung 50 eingebaut. Die aus der Führung 21 in einen Mischraum 40 austretende Luft ist folglich erwärmt, wohingegen die Luftführung 22 der Leitung nicht erwärmter Luft mit einer der Lufttemperatur an der Lufteintrittsseite des Gebläses entsprechenden Temperatur dient.

In dem Mischraum 40 werden der kalte und der warme Luftstrom aus den Luftführungen 22 und 21 vereint und gemischt. Das Mischungsverhältnis ergibt sich aus der Stellung der Schieber-Durchströmöffnung 32. In einem Extremfall kommt die Öffnung 32 vollständig mit der Öffnung der Luftführung 22 zur Deckung, so daß über den Mischraum 40 kalte Luft dem Fahrgastraum zugeführt wird. In dem anderen Extremfall überdecken sich Öffnung 32 und die Öffnung der Luftführung 21 vollständig, wobei der Schieber 30 die Luftführung 22 vollkommen verschließt. Dem Fahrgastraum wird in diesem Fall nur durch die Heizvorrichtung 50 erwärmte Luft zugeführt. Zwischen den beiden Extremstellungen ist jede beliebige Zwischenstellung möglich, in welcher jeweils ein Teil des von dem Gebläse erzeugten Luftstroms über die Luftführungen 21, 22 geleitet wird. So ist mit Hilfe des Schiebers 30 jede beliebige Zwischentemperatur einstellbar. Vorstellbar ist auch, den Schieber 30 über die vorbeschriebenen Extremstellungen hinauszudrehen, so daß nur ein kleinerer Bereich der Schieber-Durchströmöffnung 32 wirksam wird oder daß sogar beide Luftführungen 21, 22 verschlossen werden.

Die in Figur 1 gezeigte abgewinkelte Bauform der Luftführungen 21, 22 ist besonders platzsparend. Aufgrund besonderer Einbauverhältnisse kann es jedoch auch wünschenswert sein, gerade Luftführungen vorzusehen.

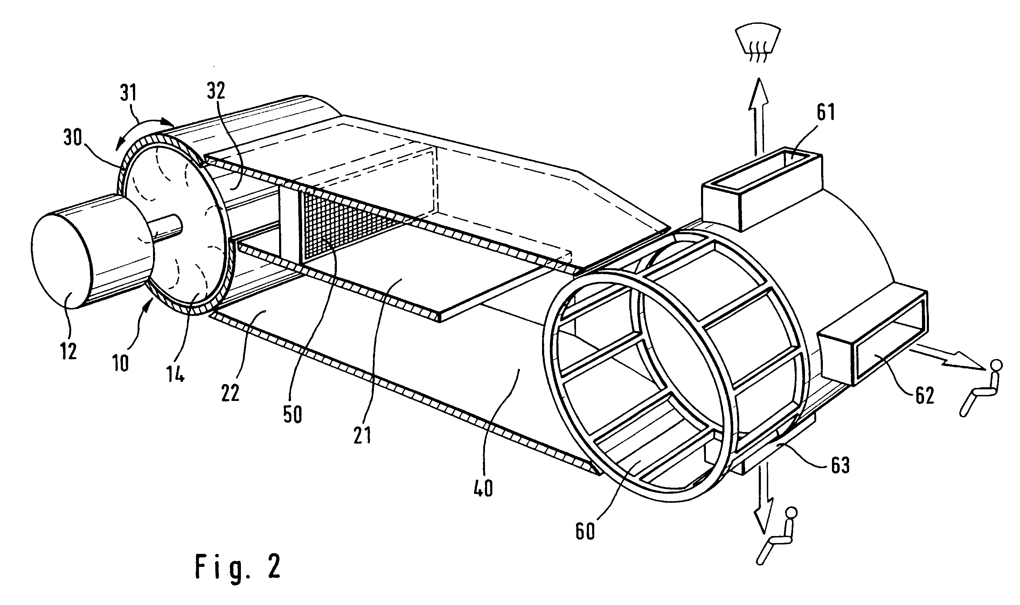

Eine solche Ausführungsform zeigt Figur 2. Entsprechende Bauteile sind dabei mit gleichen Bezugszeichen versehen.

Hier ist ein Motor 12 zu erkennen, der ein Laufrad 14 eines Gebläses 10 antreibt. Das Gebläse 10 ist von einem als Hohlzylinder ausgebildeten Schieber 30 mit einer Durchströmöffnung 32 umgeben. Ein Gebläsegehäuse ist der Übersichtlichkeit halber hier nicht dargestellt.

Eine Warmluftführung 21 mit einer Heizvorrichtung 50 sowie eine Kaltluftführung 22 führen den von dem Gebläse 10 geförderten Luftstrom in einen Mischraum 40. Das Mischungsverhältnis entspricht dabei der Stellung der Durchströmöffnung 32 des Schiebers 30, der sich in Richtung 31 verdrehen läßt. In der gezeigten Stellung wird sämtliche Luft der Warmluftführung 21 zugeleitet, so daß entsprechend der Heizleistung der Heizvorrichtung 50 maximal erwärmte Luft in den Mischraum 40 gelangt. Von dem Mischraum 40 erfolgt über einen Luftverteiler 60 die Leitung der Luft in den Fahrzeuginnenraum. Der Luftaustritt erfolgt über Auslässe 61, 62 und 63 zu den Bereichen Windschutzscheibe, Insassen-Kopfhöhe und Insassen-Fußhöhe. Die Auslässe 61, 62 und 63 werden dabei entsprechend der Stellung des Luftverteilers 60 beaufschlagt.

## Patentansprüche

1. Heizungs- und/oder Klimaeinrichtung, insbesondere für den Innenraum von Fahrzeugen, mit einem Gebläse und zwei Luftführungen, wobei eine der Luftführungen eine Heizeinrichtung aufweist und die Luftführungen in einen Mischraum münden, **dadurch gekennzeichnet, daß** die Luftführungen (21, 22) unmittelbar an den Luftaustritt des Gebläses (10) angeschlossen sind und daß ein rotatorischer oder translatorischer Schieber (30) zwischen dem Gebläse (10) und den Luftführungen (21, 22) in unmittelbarer Nähe des Gebläses angeordnet ist, wobei die Verteilung der aus dem Gebläse (10) austretenden Luft auf die Luftführungen (21, 22) mit dem Schieber (30) einstellbar ist.

2. Heizungs- und/oder Klimaeinrichtung nach Anspruch 1, **dadurch gekennzeichnet, daß** der Schieber (30) eine etwa ebene Platte ist.

3. Heizungs- und/oder Klimaeinrichtung nach Anspruch 1, **dadurch gekennzeichnet, daß** der Schieber (30) ein Hohlzylinder oder ein Segment eines Hohlzylinders ist.

4. Heizungs- und/oder Klimaeinrichtung nach Anspruch 3, **dadurch gekennzeichnet, daß** der Schieber (30) ein Gebläselaufrad (14) zumindest teilweise radial umschließt.

5. Heizungs- und/oder Klimaeinrichtung nach einem der vorhergehenden Ansprüche, **dadurch gekennzeichnet, daß** der Schieber (30) eine Durchströmöffnung (32) aufweist.

6. Heizungs- und/oder Klimaeinrichtung nach Anspruch 5, **dadurch gekennzeichnet, daß** die Durchströmöffnung (32) ein Schlitz ist und sich im wesentlichen über die gesamte Breite des Schiebers (30) erstreckt.

7. Heizungs- und/oder Klimaeinrichtung nach einem der vorhergehenden Ansprüche, **dadurch gekennzeichnet, daß** der Schieber (30) stufenlos oder stufig verstellbar ist.

8. Heizungs- und/oder Klimaeinrichtung nach einem der vorhergehenden Ansprüche, **dadurch gekennzeichnet, daß** Schieber (30) und Luftführungen (21, 22) an der Luftaustrittsseite des Gebläses (10) angeordnet sind.

9. Heizungs- und/oder Klimaeinrichtung nach einem der vorhergehenden Ansprüche, **dadurch gekennzeichnet, daß** Schieber (30) und Luftführungen (21, 22) an der Lufteintrittsseite des Gebläses (10) angeordnet sind.

10. Heizungs- und/oder Klimaeinrichtung nach einem der vorhergehenden Ansprüche, **dadurch gekennzeichnet, daß** eine der Luftführungen (21, 22) eine Kaltluftführung (22) ist.

11. Heizungs- und/oder Klimaeinrichtung nach einem der vorhergehenden Ansprüche, **dadurch gekennzeichnet, daß** eine der Luftführungen (21, 22) eine Warmluftführung (21) ist.

12. Heizungs- und/oder Klimaeinrichtung nach Anspruch 11, **dadurch gekennzeichnet, daß** in der Warmluftführung (21) eine Heizvorrichtung (50) angeordnet ist.

13. Heizungs- und/oder Klimaeinrichtung nach einem der vorhergehenden Ansprüche, **dadurch gekennzeichnet, daß** der Schieber (30) in einer Nut eines Gehäuses (11) führbar ist.

14. Heizungs- und/oder Klimaeinrichtung nach einem der vorhergehenden Ansprüche, **dadurch gekennzeichnet, daß** der Schieber (30) manuell oder motorisch verstellbar ist.

15. Heizungs- und/oder Klimaeinrichtung nach Anspruch 14, **dadurch gekennzeichnet, daß** der Schieber (30) unmittelbar oder mittels eines Bowden-Zugs verstellbar ist.

16. Heizungs- und/oder Klimaeinrichtung nach einem der vorhergehenden Ansprüche, **dadurch gekennzeichnet, daß** der Schieber (30) Teil oder Ganzes eines Gebläsegehäuses ist.

17. Heizungs- und/oder Klimaeinrichtung nach einem der Ansprüche 1 bis 15, **dadurch gekennzeichnet, daß** das Gebläse (10) und der Schieber (30) in einem einzigen Gehäuse (11) angeordnet sind.

18. Heizungs- und/oder Klimaeinrichtung nach einem der vorhergehenden Ansprüche, **dadurch gekennzeichnet, daß** der Schieber (30) und zumindest Teile der Luftführungen (21, 22) in einem einzigen Gehäuse (11) angeordnet sind.

## Claims

1. Heating and/or air-conditioning system, in particular for the interior of vehicles, with a blower and two air ducts, one of the air ducts having a heating device and the air ducts issuing into a mixing space, **characterized in that** the air ducts (21, 22) are connected directly to the air outlet of the blower (10), and **in that** a rotational or translational slide (30) is arranged between the blower (10) and the air ducts (21, 22) in the immediate vicinity of the blower, the distribution of the air which emerges from the blower (10) to the air ducts (21, 22) being capable of being set by means of the slide (30).

2. Heating and/or air-conditioning system according to Claim 1, **characterized in that** the slide (30) is an approximately planar plate.

3. Heating and/or air-conditioning system according to Claim 1, **characterized in that** the slide (30) is a hollow cylinder or a segment of a hollow cylinder.

4. Heating and/or air-conditioning system according to Claim 3, **characterized in that** the slide (30) at least partially surrounds a blower impeller (14) radially.

5. Heating and/or air-conditioning system according to one of the preceding claims, **characterized in that** the slide (30) has a throughflow orifice (32).

6. Heating and/or air-conditioning system according to Claim 5, **characterized in that** the throughflow orifice (32) is a slit and extends essentially over the entire width of the slide (30).

7. Heating and/or air-conditioning system according to one of the preceding claims, **characterized in that** the slide (30) is adjustable continuously or in steps.

8. Heating and/or air-conditioning system according to one of the preceding claims, **characterized in that** the slide (30) and the air ducts (21, 22) are arranged on the air outlet side of the blower (10).

9. Heating and/or air-conditioning system according to one of the preceding claims, **characterized in that** the slide (30) and the air ducts (21, 22) are arranged on the air inlet side of the blower (10).

10. Heating and/or air-conditioning system according to one of the preceding claims, **characterized in that** one of the air ducts (21, 22) is a cold-air duct (22).

11. Heating and/or air-conditioning system according to one of the preceding claims, **characterized in that** one of the air ducts (21, 22) is a warm-air duct (21).

12. Heating and/or air-conditioning system according to Claim 11, **characterized in that** a heating device (50) is arranged in the warm-air duct (21).

13. Heating and/or air-conditioning system according to one of the preceding claims, **characterized in that** the slide (30) can be guided in a groove of a housing (11).

14. Heating and/or air-conditioning system according to one of the preceding claims, **characterized in that** the slide (30) is adjustable manually or motively.

15. Heating and/or air-conditioning system according to Claim 14, **characterized in that** the slide (30) can be adjusted directly or by means of a Bowden cable.

16. Heating and/or air-conditioning system according to one of the preceding claims, **characterized in that** the slide (30) is part or all of a blower housing.

17. Heating and/or air-conditioning system according to one of Claims 1 to 15, **characterized in that** the blower (10) and the slide (30) are arranged in a single housing (11).

18. Heating and/or air-conditioning system according to one of the preceding claims, **characterized in that** the slide (30) and at least some of the air ducts (21, 22) are arranged in a single housing (11).

## Revendications

1. Installation de chauffage et/ou de climatisation, en particulier pour l'espace intérieur de véhicules, avec une soufflante et deux conduits d'air, dans lequel un des conduits d'air présente une installation de chauffage et les conduits d'air débouchent dans une chambre de mélange, **caractérisée en ce que** les conduits d'air (21, 22) sont raccordés directement à la sortie d'air de la soufflante (10) et **en ce qu'**un registre rotatif ou coulissant (30) est disposé entre la soufflante (10) et les conduits d'air (21, 22) à proximité immédiate de la soufflante (10), la répartition de l'air sortant de la soufflante (10) sur les conduits d'air (21, 22) étant réglable par le registre (30).

2. Installation de chauffage et/ou de climatisation suivant la revendication 1, **caractérisée en ce que** le registre (30) est une plaque sensiblement plane.

3. Installation de chauffage et/ou de climatisation suivant la revendication 1, **caractérisée en ce que** le registre (30) est un cylindre creux ou un segment d'un cylindre creux.

4. Installation de chauffage et/ou de climatisation suivant la revendication 3, **caractérisée en ce que** le registre (30) entoure radialement au moins en partie une roue mobile (14) de la soufflante.

5. Installation de chauffage et/ou de climatisation suivant l'une quelconque des revendications précédentes, **caractérisée en ce que** le registre (30) présente une ouverture de passage (32).

6. Installation de chauffage et/ou de climatisation suivant la revendication 5, **caractérisée en ce que** l'ouverture de passage (32) est une fente et s'étend sensiblement sur toute la largeur du registre (30).

7. Installation de chauffage et/ou de climatisation suivant l'une quelconque des revendications précédentes, **caractérisée en ce que** le registre (30) est réglable en continu ou par degrés.

8. Installation de chauffage et/ou de climatisation suivant l'une quelconque des revendications précédentes, **caractérisée en ce que** le registre (30) et les conduits d'air (21, 22) sont disposés du côté de la sortie d'air de la soufflante (10).

9. Installation de chauffage et/ou de climatisation suivant l'une quelconque des revendications précédentes, **caractérisée en ce que** le registre (30) et les conduits d'air (21, 22) sont disposés du côté de l'entrée d'air de la soufflante (10).

10. Installation de chauffage et/ou de climatisation suivant l'une quelconque des revendications précédentes, **caractérisée en ce qu'**un des conduits d'air (21, 22) est un conduit d'air froid (22).

11. Installation de chauffage et/ou de climatisation suivant l'une quelconque des revendications précédentes, **caractérisée en ce qu'**un des conduits d'air (21, 22) est un conduit d'air chaud (21).

12. Installation de chauffage et/ou de climatisation suivant la revendication 11, **caractérisée en ce qu'**un dispositif de chauffage (50) est disposé dans le conduit d'air chaud (21).

13. Installation de chauffage et/ou de climatisation suivant l'une quelconque des revendications précédentes, **caractérisée en ce que** le registre (30) peut être guidé dans une rainure d'une enceinte (11).

14. Installation de chauffage et/ou de climatisation suivant l'une quelconque des revendications précédentes, **caractérisée en ce que** le registre (30) est réglable à la main ou par un moteur.

15. Installation de chauffage et/ou de climatisation suivant la revendication 14, **caractérisée en ce que** le registre (30) est réglable directement ou au moyen d'un câble Bowden.

16. Installation de chauffage et/ou de climatisation suivant l'une quelconque des revendications précédentes, **caractérisée en ce que** le registre (30) est une partie ou la totalité d'une enceinte de soufflante.

17. Installation de chauffage et/ou de climatisation suivant l'une quelconque des revendications 1 à 15, **caractérisée en ce que** la soufflante (10) et le registre (30) sont disposés dans une seule enceinte (11).

18. Installation de chauffage et/ou de climatisation suivant l'une quelconque des revendications précédentes, **caractérisée en ce que** le registre (30) et au moins des parties des conduits d'air (21, 22) sont disposés dans une seule enceinte (11).
